# EUROPEAN PATENT SPECIFICATION

(11) **EP 3 718 346 B1**
(45) Date of publication and mention of the grant of the patent: **13.07.2022**
(21) Application number: 17808844.9
(22) Date of filing: 27.11.2017
(51) Int. Cl.: H04W 52/02

(54) **COLLECTIVE LOCATION REPORTING OF A GROUP OF MOBILE DEVICES**
KOLLEKTIVE STANDORTMELDUNG EINER GRUPPE VON MOBILEN VORRICHTUNGEN
RAPPORT DE LOCALISATION COLLECTIF D'UN GROUPE DE DISPOSITIFS MOBILES

(43) Date of publication of application: 07.10.2020
(73) Proprietor: Sony Network Communications Europe B.V., 2132 LS Hoofddorp (NL)
(72) Inventor: SUNDSTROM, Henrik, 221 88 Lund (SE); PETEF, Andrej, 221 88 Lund (SE); PRIYANTO, Basuki, 22 479 Lund (SE); MELLQVIST, Anders, 221 88 Lund (SE); ISBERG, Anders, 221 88 Lund (SE); NORD, Lars, 223 59 Lund (SE)
(74) Representative: Kraus & Weisert Patentanwälte PartGmbB
(86) International application number: PCT/EP2017/080552
(87) International publication number: WO 2019/101348

(56) References cited:
- US-A1- 2010 194 632
- US-A1- 2015 373 646
- US-B1- 7 359 713

## Description

### FIELD OF THE INVENTION

Various embodiments of the invention relate to methods for location reporting of a group of mobile devices, and to devices operating according to these methods. Various embodiments relate in particular to methods and devices operable in cellular networks and in connection with Internet of Things contexts.

### BACKGROUND OF THE INVENTION

The Internet of Things (loT) relates to a network of embedded devices having Wide Area Network (WAN) connectivity which enables exchanging data, e.g. with a cloud service.

One key feature for loT devices is location reporting and tracking. For example, if a plurality of loT devices is located in vicinity of each other, e.g. in a truck load such as a container loaded to a truck, it may make sense to conserve battery resources by allowing the plurality of loT devices to share the task of reporting their joint location.

US 2015/373646 A1 discloses a method of controlling battery usage of a first mobile device in a monitoring system for monitoring a plurality of mobile devices which are monitored at a server, the system comprising the server and the plurality of mobile devices monitored at the server, the plurality of mobile devices including the first mobile device, the first mobile device including a battery, the method comprising the steps of: (i) each mobile device acquiring location data; (ii) each mobile device sending the acquired location data to the server via a telecommunications network; (iii) the first mobile device receiving an instruction from the server to adjust how often the first mobile device reports location data to the server, so as to control a battery usage of the first mobile device.

US 2010/194632 A1 discloses methods, systems, and program products. Data representing a plurality of power management profiles for a battery-operated wireless computing device are stored on the device. The power management profiles correspond to different power consumption levels. Each power management profile defines a feature for determining a geographic location of the device from among a plurality of features that are available for determining the geographic location of the device, and a frequency for employing the feature to determine the geographic location of the device. A first battery level of the device is determined. If the determined battery level is lower than a first predetermined amount, the device switches from a first power management profile having a first consumption level to a second power management profile having a second consumption level that is lower than the first consumption level.

US 7 359 713 B1 discloses systems and methods for providing power management for a mobile communication device having a location determination function. The frequency of the location determination function may be adjusted based on whether the mobile communication device is moving and may be further adjusted based on battery voltage or expected battery life.

This is a well-known problem and several solutions have been proposed. For example, depending on one or more criteria, such as good battery level, good radio conditions, and/or same mobility pattern (e.g. on a train or bus), a group leader (relay node) for the group of devices may be assigned. This assignment could be carried out among the devices, by the network or by a cloud function. In addition, devices of the group may take turns in acting as a group leader.

One drawback of such prior art solutions is that the group leader will take all the reporting load. In case of said truck load, it is likely that a box or tray in the upper-back part will have the best radio condition and then be assigned as the group leader. That box or tray might then drain its battery much more than the other boxes or trays in the truck, even if it is for a finite time.

### BRIEF SUMMARY OF THE INVENTION

In view of the above, there is a need in the art for methods for battery-conserving location reporting of a group of mobile devices, and to devices operating according to these methods, which address some of the above needs.

These underlying objects of the invention are each solved by methods and devices as defined by the independent claims. Preferred embodiments of the invention are set forth in the dependent claims.

According to a first aspect, a method is provided. The method is for providing location information of a group of mobile devices of a wireless network to a network node of the wireless network, and comprises repetitively transmitting, by at least one mobile device of the group of mobile devices, a location information of the respective mobile device at a respective reporting frequency. The respective reporting frequency of the respective mobile device depends on an energy balance of the respective mobile device. The method further comprises receiving, by the at least one mobile device and from the network node, a reporting configuration. The reporting configuration comprises the reporting frequency of the respective mobile device and a reporting start time of the respective mobile device. The location information is transmitted by the at least one mobile device in accordance with the reporting start time.

The term "group" as used herein may refer to a plurality of mobile devices which move or are being moved jointly, without necessarily knowing of each other, and which may be managed jointly by the network owing to the similar movement pattern. For example, the network node may assign mobile devices having similar locations, velocities and/or movement directions dynamically to such a group. In further examples, it would be possible that mobile devices are grouped based on control data, which may be stored at the network node. Assigning a particular mobile device to a group indicates that information related to this particular mobile device may be taken into account when managing the plurality of mobile devices of the group, in particular for purposes of location reporting.

The term "mobile device" as used herein may refer to an apparatus capable of moving or being moved and comprising a radio interface by which Wide Area Network (WAN) connectivity to a wireless network, in particular to a cellular network, may be established and maintained. Examples for such mobile devices comprise smartphones, computers, Narrowband Internet of Things (NB-IoT) devices, as well as loT devices.

As an example, mobile devices may be arranged in boxes or trays or containers used for providing a delivery/logistics service.

The term "wireless network" as used herein may refer to a communication network which comprises wireless/radio links between network nodes, besides fixed network links interconnecting the functional entities of the wireless network's infrastructure. Examples for such a network comprise Universal Mobile Telecommunications System, UMTS, and Third Generation Partnership, 3GPP, Long Term Evolution, LTE, cellular networks, New Radio, NR, 5G networks, Long Range radio, LoRa, etc. Generally, various technologies of wireless networks may be applicable and may provide WAN connectivity.

The term "network node" as used herein may refer to a cloud server infrastructure which renders a cloud service via available WAN connectivity. The cloud server infrastructure may be implemented by server hardware/software and/or distributed processing. The network node may be part of a wireless network or a data network, e.g., the Internet.

The term "cloud service" broadly refers to an Information Technology (IT) service rendered to devices having WAN connectivity to a cloud server infrastructure. As used herein, the term in particular may relate to a server application interacting with mobile devices in order to render a business process. An example for such a cloud service is a tracking service keeping track of the geographic location/position of boxes or trays used for providing a delivery/logistics service.

The term "location information" as used herein may refer to a set of geographic coordinates defining a particular geographic location. For example, location information may comprise latitude and longitude information, optionally altitude information, and may be represented as decimal degrees, as degrees - minutes - seconds, or in any other representation. The location information may represent the last known cell, sector of a cell, or the position of the mobile device itself. The location information of a particular mobile device may be transmitted in a protocol message along with further information of the particular mobile device.

The term "repetitively" as used herein may refer to a recurrent information transfer of potentially varying information. In other words, a particular communication is performed a plurality of times according to a predefined or resultant repetition pattern, resulting in a plurality of respective communications (or communication acts). The repetitions may be according to a predefined timing schedule.

The term "reporting frequency" as used herein may refer to a reporting of an information of interest according to a predefined or resultant repetition pattern which is characterized by a frequency of occurrence of consecutive reporting acts. It is not required that the reporting frequency obeys a strict periodicity; rather, a certain distribution of frequencies of occurrences is possible.

The term "energy balance" as used herein may refer to a power budget, in particular of battery power, of a particular mobile device. The energy balance may be determined prospectively. Hence, estimated future conditions may be taken into account. For example, an amount of network activity may be taken into account to predict battery drain. For larger predicted battery drains, a lower energy balance may result. For example, the energy balance may take into account a radio link quality. Typically, larger battery drains result from a poor radio link quality; this may be due to a need for higher transmit powers and/or a higher count of transmission repetitions. Generally, the energy balance may be indicative of the power budget available for performing communication acts, and in particular location reporting acts, via its radio interface to a wireless network.

The location information is transmitted to a network node. Thereby, direct location reporting is implemented between the mobile devices of the group of mobile devices and the network node.

Advantageously, the task/burden of location reporting of a group of mobile devices may be shared between the mobile devices of the group. For example, some mobile devices of the group having a substantial remaining power budget may perform energy-consuming communication acts more often than other mobile devices of the group running short of remaining power budget. This optimizes both individual as well as overall power/battery consumption of the mobile devices in the group by assigning reporting frequencies to the respective mobile devices of the group which take into account respective energy balances of the respective mobile devices.

Advantageously, location information can be communicated in a short signaling message, for which only Signaling Radio Bearers (SRBs) are established to transport a Non-Access Stratum (NAS) message, and no radio access encryption is deployed. This results in a lightweight protocol.

Advantageously, providing respective mobile devices of a group with respective reporting configurations enables sharing the task/burden of location reporting of the group without formally assigning a group leader. Thus, it may not be required to have a group leader. Rather, all mobile devices of the group may be peers; there may be no hierarchy imposed by having a group leader.

Additionally or alternatively, receiving a reporting configuration for the respective mobile device may be achieved via a legacy 3GPP Multimedia Broadcast Multicast Service, MBMS, available via the Service Capability Exposure Function, SCEF, service as specified in 3GPP TS 23.682, Version 15.0.0 (2017-03), e.g., section 4.5.18.

According to embodiments, the reporting configuration for the respective mobile device comprises the reporting frequency of the respective mobile device in dependence of the energy balance of the respective mobile device.

The term "reporting start time" as used herein may refer to a timing information at which a particular mobile device of a group of mobile devices is supposed to start reporting its location information according to a repetition pattern characterized by the configured reporting frequency.

Advantageously, providing individual mobile devices of a group with individual reporting start times enables coordinating the repetition patterns of the individual mobile devices of the group by the network node in such a way that a repetition pattern of the group is distributed more evenly over time. In other terms, the mobile devices of a group may take turns in reporting their individual location information to the network node. Hence, an interleaved reporting may be achieved in time domain. This is particularly important in cases when for individual mobile devices of the group different reachability information applies, for example owing to different sleep patterns, operation in Idle Mode Discontinuous Reception, DRX, and/or operation in Power Saving Mode, PSM, such that the individual mobile devices of the group may not be available for joint configuration in general.

Specifically, it may be possible that the mobile devices of the group are semi-persistently scheduled to implement the reporting interleaved in time domain by means of the reporting configuration. Hence, it may not be required to re-configured the various mobile devices at a rate comparable to the reporting frequency. Rather, once configured, the various mobile devices may each repeatedly report; thereby, forming an interleaved reporting pattern.

According to embodiments, the method further comprises transmitting, by the at least one mobile device and to the network node, one or more parameters indicative of the energy balance of the respective mobile device.

Advantageously, providing one or more parameters indicative of the energy balance of the respective mobile device enables taking into account the remaining power budget of the respective mobile devices when determining its respective reporting frequency.

The one or more parameters indicative of the energy balance for the mobile device each may have values expressible in a respective number of binary digits, such that integer values as well as floating point values may be represented. Examples of such values are discrete integer values from 3 to 0 and requiring two binary digits, or integer/floating point values expressing percentage levels.

According to embodiments, the one or more parameters indicative of the energy balance of the respective mobile device comprise a battery status.

The term "battery status" as used herein may refer to a remaining capacity of an electric charge storage which may effectively be used for powering the particular mobile device comprising the respective electric charge storage. The battery status may include state of charge and/or state of health of the battery. In general, a good/medium/poor effective remaining battery capacity coincides with a low/medium/high quantity of potential energy expenditures for communication acts until the effective remaining battery capacity is depleted. Therefore, mobile devices reporting a good/medium/poor battery status, and thus having good/medium/poor effective remaining battery capacity, may have a high/medium/low energy balance.

The battery status of a mobile device may, for example, be represented as a discrete value, e.g. from 3 to 0, or as a percentage level. Mobile devices reporting a battery status = 0 will need to preserve battery power more strictly than mobile devices reporting a battery status = 3. As an example, mobile devices reporting a battery status = 3 may therefore report their location information eight times more often than mobile devices reporting a battery status = 0.

According to embodiments, the one or more parameters indicative of the energy balance of the respective mobile device comprise a radio link status.

The term "radio link status" as used herein may refer to a transmission quality rendered by a wireless/radio link of a wireless network. In general, good/medium/poor transmission quality coincides with low/medium/high energy expenditure for a communication act. Therefore, mobile devices reporting a good/medium/poor radio link status, and thus being exposed to a good/medium/poor transmission quality, may have a good/medium/low energy balance.

The radio link status of a mobile device may, for example, be represented as a discrete value, e.g. from 3 to 0, or as a transmit level or receive level (e.g. Receive Signal Received Power, RSRP, in dBm, or Receive Signal Strength Indicator, RSSI, in dBm). Mobile devices reporting a link status = 0 will consume much more battery power than mobile devices reporting a link status = 3. As an example, mobile devices reporting a link status = 3 may therefore report their location information four times more often than mobile devices reporting a link status = 0.

According to a second aspect, a mobile device of a group of mobile devices is provided. The mobile device comprises a processor configured to repetitively transmit location information of the mobile device at a respective reporting frequency, wherein the respective reporting frequency depends on an energy balance of the respective mobile device. The processor is further configured to receive a reporting configuration. The reporting configuration comprises the respective reporting frequency and a reporting start time. The location information is transmitted by the mobile device in accordance with the reporting start time.

The term "processor" as used herein may refer to a functional entity of a device used to perform method steps provided in a memory of the device.

According to embodiments, the processor is further configured to perform, according to embodiments, the method of providing location information of a group of mobile devices of a wireless network to a network node of the wireless network.

Advantageously, the technical effects and advantages described above in relation with the method according to the first aspect equally apply to the mobile device according to the second aspect which is configured to perform the method.

According to a third aspect, a method for operating a network node is provided. The method comprises repetitively receiving, from each mobile device of a group of mobile devices of a wireless network, a location information of the respective mobile device at a respective reporting frequency; determining a location information of the group of mobile devices depending on the location information of the mobile devices of the group of mobile devices; and setting the respective reporting frequency of each mobile device of the group of mobile devices depending on an energy balance of the respective mobile device. The method further comprises transmitting, to each mobile device of the group, a reporting configuration for the respective mobile device. The reporting configuration for the respective mobile device comprises the respective reporting frequency of the respective mobile device and a reporting start time of the respective mobile device.

According to embodiments, setting the respective reporting frequency of each mobile device of the group of mobile devices comprises setting the respective reporting frequency of the respective mobile device depending on a comparison of the energy balance of the respective mobile device with energy balances of one or more further mobile devices of the group of mobile devices.

Advantageously, the technical effects and advantages described above in relation with the method according to the first aspect equally apply to the method according to the third aspect which defines substantially the same invention in terms of method features relating to the network node.

Additionally or alternatively, transmitting a reporting configuration for the respective mobile device may be achieved via a legacy 3GPP Multimedia Broadcast Multicast Service, MBMS, available via the SCEF service as specified in 3GPP TS23.682. For example, if the mobile device is assigned a Temporary Mobile Group ID, TMGI, group communication over Group Communication Service, GCS, and MBMS may be deployed.

By such techniques, it is possible to centrally coordinate reporting of the mobile devices of the group. A network configuration of the reporting becomes possible. Thereby, energy-efficient reporting may be achieved across the various mobile devices of the group.

According to embodiments, repetitively receiving the location information from each mobile device of the group of mobile devices comprises receiving the location information from the mobile devices of the group of mobile devices in an interleaved manner in time domain. Hence, the location information may be alternatingly received from different mobile devices of the group of mobile devices.

According to embodiments, receiving, from each mobile device of the group of mobile devices, one or more parameters indicative of the energy balance of the respective mobile device, wherein setting the reporting frequency of each mobile device of the group of mobile devices comprises setting the reporting frequency of the respective mobile device depending on the one or more parameters.

According to embodiments, the one or more parameters indicative of the energy balance of the respective mobile device comprise a battery status.

According to embodiments, the one or more parameters indicative of the energy balance of the respective mobile device comprise a radio link status.

According to embodiments, the method further comprises performing a threshold comparison between the one or more parameters of the respective mobile device and one or more respective thresholds, wherein setting the reporting frequency of each mobile device of the group of mobile devices comprises setting the reporting frequency of the respective mobile device depending on the threshold comparison.

The term "thresholds" as used herein may refer to one or more predefined values used by the network node to map the one or more parameters reported by the respective mobile device of the group to particular reporting frequencies. For example, given a battery status and a radio link status of a particular mobile device, it may be determined by the network node if these parameters exceed or fall below given upper and/or lower bound thresholds, and thus fall into one of a plurality of classes relating to different reporting frequencies.

Advantageously, performing a threshold comparison enables mapping the one or more parameters to a plurality of different reporting frequencies which relate to different combinations of value ranges of the one or more parameters.

According to embodiments, setting the reporting frequency of each mobile device of the group of mobile devices comprises setting the reporting frequency of the respective mobile device of the group of mobile devices depending on a target location of the group of mobile devices.

The term "target location" as used herein may refer to a target geographic location, and to a corresponding location information, of the mobile devices of the group. For example, if the mobile devices accompany boxes or trays used in a delivery/logistics service, the target location is the target geographic location to which the boxes or trays are supposed to be delivered by the delivery/logistics service. The target location may correspond to a destination of a planned route. The target location may correspond to a predicted location at a future point in time.

According to embodiments, setting the reporting frequency of each mobile device of the group of mobile devices comprises setting the reporting frequency of the respective mobile device depending on a distance between a location of the group of mobile devices associated with the location information of the group of mobile devices and the target location.

Advantageously, this enables involving a distance of a mobile device of the group to the received target location of the group as an influence factor of the energy balance of the mobile device of the group. In general, a large/medium/low remaining distance coincides with a high/medium/low quantity of potential energy expenditures for communication acts until the effective remaining battery capacity is depleted. Therefore, a large/medium/low remaining distance may be understood as giving rise to a low/medium/high energy balance.

For example, given a location information of a group and a number of threshold distances, it may be determined by the network node if the distance of the group to its target location exceeds or falls below the given threshold distances, and thus falls into one of a plurality of classes pertaining to different reporting frequencies. For example, exceeding a threshold distance of the group to its target location may result in a reporting frequency of zero for all the mobile devices of the group. Alternatively or additionally, undershooting one or more threshold distances of the group to its target location may result in reporting frequencies for the mobile devices of the group that increase with proximity of the group to its target location.

Advantageously, when setting the reporting frequency of each mobile device of the group of mobile devices, involving a distance of the group of mobile devices to the received target location of the group enables mapping this distance to a plurality of different reporting frequencies.

According to embodiments, setting the reporting frequency of each mobile device of the group of mobile devices comprises setting the reporting frequency of a mobile device of the group of mobile devices to zero if the energy balance of the mobile device falls below a predefined threshold.

According to embodiments, the method further comprises repetitively retrieving, for one or more mobile devices of the group of mobile devices and from a core network node of the wireless network, a further location information of the respective mobile device.

The term "predefined threshold" as used herein may refer to one or more operational reasons for deactivation of direct location reporting of one or more mobile devices of the group. Such a threshold may, for example, arise from a certain reporting frequency/occurrence observable for one or more mobile devices of the group owing to their mobility and/or timer configuration upon subscription to the wireless network's positioning service. Given a certain reporting frequency available from this network-provided positioning service, it may make sense to only selectively deploy direct location reporting for the one or more mobile devices of interest, for example because a more regular and/or densely location reporting of the group is required.

For example, such a network function is provided in LTE cellular networks by network entities such as a Mobility Management Entity, MME, and/or an Evolved Serving Mobile Location Center, E-SMLC. Every time a particular mobile device gives rise to a so-called Tracking Area Update, TAU, for example due to mobility of the mobile device and/or expiry of a corresponding network-configured timer, a NAS message is sent to the network, in particular to the MME entity. A corresponding location information of the particular mobile device is derived/estimated by the network based on from where the NAS message was sent. In particular, this location information is provided by an Evolved Node B, eNB, and may be the cell ID from where the TAU was sent, or more detailed location derived by the eNB e.g. a sector of the cell or an estimated position of the mobile device.

This mobility-dependent location information may be subscribed to via a corresponding SCEF for one or more indicated mobile devices. The network function from then on relays a further location information for the indicated mobile devices to the subscribing entity.

Advantageously, setting the reporting frequency for a mobile device of the group to zero may further reduce the burden of location reporting of the group.

Advantageously, repetitively retrieving a further location information of the respective mobile device from the wireless network's positioning service may substitute or supplement a direct location reporting between the one or more mobile devices and the network node, and thus may, depending on the circumstances, further reduce the burden of location reporting of the group by utilizing a mix of direct location reporting and "indirect" location reporting via the wireless network's positioning service.

According to a fourth aspect, a network node is provided. The network node comprises a processor configured to perform: repetitively receiving, from each mobile device of a group of mobile devices of a wireless network, a location information of the respective mobile device at a respective reporting frequency; determining a location information of the group of mobile devices depending on the location information of the mobile devices of the group of mobile devices; and setting the reporting frequency of each mobile device of the group of mobile devices depending on an energy balance of the respective mobile device. The processor is further configured to perform: transmitting, to each mobile device of the group, a reporting configuration for the respective mobile device. The reporting configuration for the respective mobile device comprises the respective reporting frequency of the respective mobile device and a reporting start time of the respective mobile device.

According to embodiments, the processor is configured to perform the method of operating a network node according to embodiments.

Advantageously, the technical effects and advantages derived above in relation with the method according to the third aspect equally apply to the mobile device according to the fourth aspect which is configured to perform the method.

### BRIEF DESCRIPTION OF THE DRAWINGS

Embodiments of the invention will be described with reference to the accompanying drawings, in which the same or similar reference numerals designate the same or similar elements.
Fig. 1 illustrates schematically, within a high-level architecture of a wireless network, both "direct" location reporting between mobile devices and a network node, and network-provided positioning service.
Figs. 2-4 illustrate schematically methods according to various embodiments.
Fig. 5 illustrates schematically a location information as defined in methods according to various embodiments.
Fig. 6 illustrates schematically a reporting configuration as defined in methods according to various embodiments.
Fig. 7 illustrates schematically a mobile device according to an embodiment.
Fig. 8 illustrates schematically a network node according to an embodiment.

### DETAILED DESCRIPTION OF EMBODIMENTS

Exemplary embodiments of the invention will now be described with reference to the drawings. While some embodiments will be described in the context of specific fields of application, the embodiments are not limited to this field of application. Further, the features of the embodiments may be combined with each other unless specifically stated otherwise.

The drawings are to be regarded as being schematic representations and elements illustrated in the drawings are not necessarily shown to scale. Rather, the elements are represented such that their function and general purpose become apparent to a person skilled in the art.

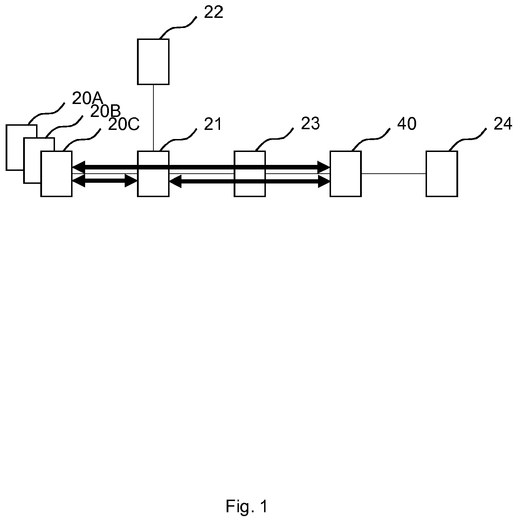

Fig. 1 illustrates schematically, within a high-level architecture of a wireless network 21-23, both "direct" location reporting between mobile devices 20A-20C and a network node 40, as well as a network-provided positioning service, which collects and provides further mobility-dependent location information of the mobile devices 20A-20C, and which thus realizes an "indirect" location reporting scheme.

The mobile devices 20A-20C shown at the left-hand side of Fig. 1 may, for example, represent loT devices which accompany boxes or trays used for providing a delivery/logistics service. Fig. 1 also depicts a delivery service entity 24 having WAN connectivity to the network node 40. The delivery service entity 24 is configured to specify respective target locations for the boxes or trays, or for groups thereof.

The wireless network 21-23 shown in the center of Fig. 1 comprises MME 21, E-SMLC 22 and SCEF 23 entities, and provides WAN connectivity between the mobile devices 20A-20C and the network node 40.

The network-provided positioning service rendered by the wireless network 21-23 is indicated in Fig. 1 by respective arrows extending from the MME 21 to the mobile devices 20A-20C and the network node 40.

Operation of the network-provided positioning service is as follows: Every time a particular mobile device 20A-20C gives rise to a TAU, for example due to mobility of the mobile device and/or expiry of a corresponding network-configured timer, a NAS message is sent to the network, in particular to the MME entity 21. A corresponding location information of the particular mobile device 20A-20C is derived/estimated by the MME 21 based on from where the NAS message was sent. In particular, this location information is provided by an eNB (not shown), and may be a cell ID from where the TAU was sent, or a more detailed location derived by the eNB, e.g. a sector ID of the cell or an estimated position of the mobile device 20A-20C. Such mobility-dependent location information may be subscribed to via a corresponding SCEF 23 for one or more indicated mobile devices 20A-20C. In response, the network's positioning service provides a further location information for the indicated mobile devices 20A-20C to the subscribing entity upon availability. For example, if the network node 40 subscribes to location information of mobile devices 20A-20C of interest via a corresponding interface of the SCEF 23, then the network node 40 participates in receiving any updated location information for said mobile devices 20A-20C.

With continued reference to Fig. 1, the wireless network 21-23 also enables, via the provided WAN connectivity, a "direct" location reporting between the mobile devices 20A-20C and the network node 40, which is indicated by a further arrow extending between these entities end-to-end.

Alternatively or additionally to retrieving location information for particular mobile devices 20A-20C via the SCEF 23 entity, the location information may be communicated using a normal user plane path via a PDN gateway, PGW (not shown).

In the following, method 10 defining the "direct" location reporting from the protocol perspective of the mobile devices 20A-20C, as well as method 30 defining the same from the protocol perspective of the network node 40 are described in more detail. In this context, the term "communicating" as used in the following may be interpreted as "transmitting" or "receiving", depending on the respective protocol perspective.

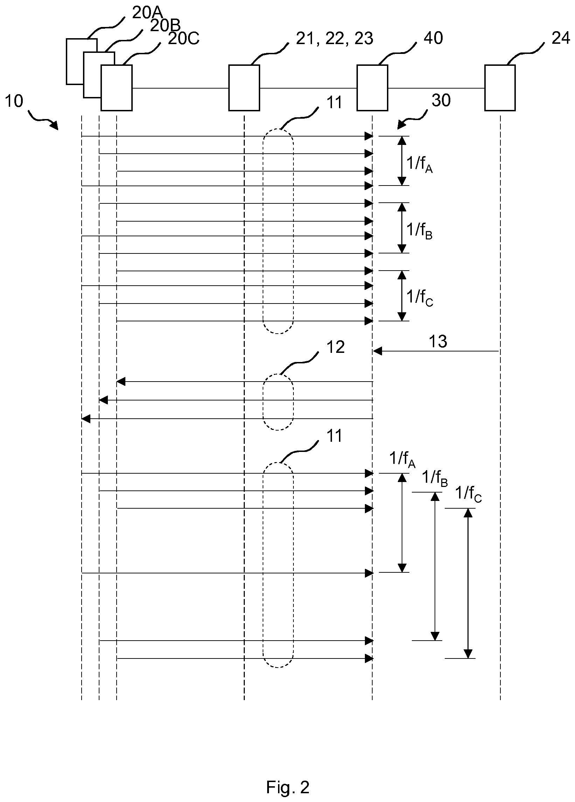

Figs. 2-4 illustrate schematically methods 10, 30 according to various embodiments. At the top of Figs. 2-4, a simplified network architecture comprising mobile devices 20A-20C, the wireless network 21-23, the network node 40 and the delivery service entity 24 is depicted. The solid lines connecting these entities represent the WAN connectivity provided by the wireless network 21-23.

Method 10 is for providing location information of the group of mobile devices 20A-20C of the wireless network 21-23 to the network node 40 of the wireless network 21-23, while method 30 is a corresponding method of operating the network node 40.

As may be taken from the top half of Fig. 2, methods 10, 30 comprise repetitively communicating, i.e. transmitting or receiving, from at least one mobile device 20A-20C of the group of mobile devices 20A-20C to the network node 40 of the wireless network 21-23, a location information 11 of the respective mobile device 20A-20C at a respective reporting frequency f_{A}-f_{C}. Initially, the reporting frequencies f_{A}-f_{C} correspond to a default frequency, for example every five minutes. Therefore, all initial reporting frequencies f_{A}, f_{B}, fc are identical. For method 30, this comprises receiving the location information 11, 11A from the mobile devices 20A-20C of the group of mobile devices 20A-20C in an interleaved manner, as can be taken from in Fig. 2, too.

Method 30 further comprises determining a location information of the group of mobile devices 20A-20C depending on the location information 11 of the mobile devices 20A-20C of the group of mobile devices 20A-20C. In other words, the respective location information 11, 11A of each of the mobile devices 20A-20C of the group of mobile devices 20A-20C is regarded as the location information of the group. For example, a most recent location information of any of the mobile devices 20A-20C of the group may be considered as the location information of the group.

In the embodiment illustrated in Fig. 2, the network node 40 additionally receives, from the delivery service entity 24, a target location 13 of the group of mobile devices 20A-20C.

Based on the location information 11 repetitively received from the mobile devices 20A-20C, and on the target location 13 of the group of mobile devices 20A-20C received from the delivery service entity 24, if available, the respective reporting frequency f_{A}-f_{C} of each mobile device 20A-20C of the group of mobile devices 20A-20C is set depending on an energy balance of the respective mobile device 20A-20C. In doing so, the network node 40 also considers the number of mobile devices 20A-20C of the group in order to achieve a predefined overall group reporting rate.

In method 30, setting the reporting frequency f_{A}-f_{C} of the respective mobile device 20A-20C of the group of mobile devices 20A-20C may depend on one or more parameters 11B, 11C received from each mobile device 20A-20C of the group, which are indicative of the energy balance of the respective mobile device 20A-20C.

Additionally, setting the reporting frequency f_{A}-f_{C} of the respective mobile device 20A-20C may depend on a threshold comparison performed between the one or more parameters 11B, 11C of the respective mobile device 20A-20C and one or more respective thresholds.

Additionally or alternatively, setting the reporting frequency f_{A}-f_{C} of the respective mobile device 20A-20C may depend on a target location 13 of the group of mobile devices 20A-20C, in particular on a distance between a location of the group of mobile devices 20A-20C associated with the location information of the group of mobile devices and the target location 13.

Additionally or alternatively, setting the reporting frequency f_{A}-f_{C} of the respective mobile device 20A-20C may depend on a comparison of the energy balance of the respective mobile device 20A-20C with energy balances of one or more further mobile devices 20A-20C of the group of mobile devices 20A-20C.

The respective reporting frequency f_{A}-f_{C} of the respective mobile device 20A-20C may be set in any of the above ways.

With continuing reference to Fig. 2, methods 10, 30 comprise communicating, i.e. transmitting or receiving, from the network node 40 and to each mobile device 20A-20C of the group, a reporting configuration 12 for the respective mobile device 20A-20C. The reporting configuration 12 for the respective mobile device 20A-20C comprises the respective reporting frequency 12A, f_{A}-f_{C} of the respective mobile device 20A-20C, in particular in dependence of the energy balance of the respective mobile device 20A-20C, and a reporting start time 12B of the respective mobile device 20A-20C. The respective reporting frequencies f_{A}, f_{B}, and fc may, for example, amount to every 10, 15, and 15 minutes.

Upon configuration of the respective mobile devices 20A-20C based on their respective reporting configuration 12, which includes a respective reporting frequency f_{A}-f_{C}, and according to method 10, at least one mobile device 20A-20C of the group of mobile devices 20A-20C repetitively transmits a location information 11, 11A of the respective mobile device 20A-20C at the respective reporting frequency f_{A}-f_{C}, which depends on an energy balance of the respective mobile device 20A-20C.

If also provided, the location information 11 is transmitted by the at least one mobile device 20A-20C in accordance with the reporting start time 12B.

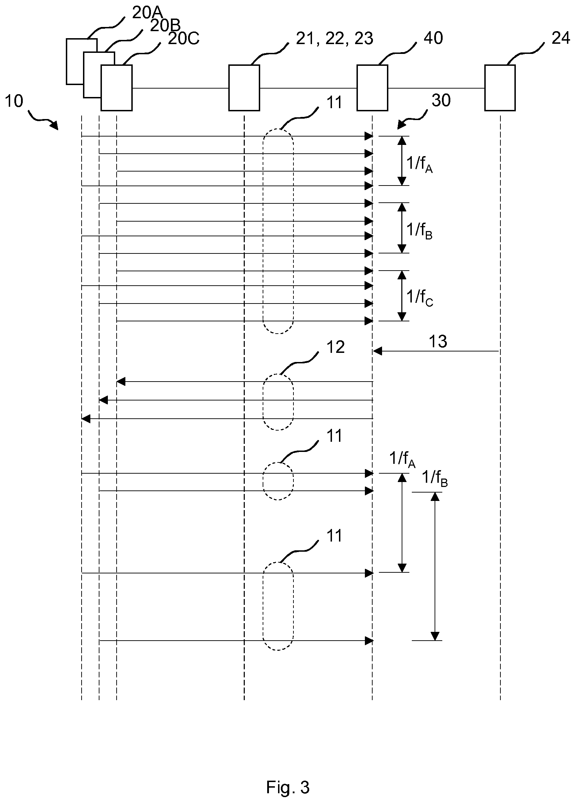

Fig. 3 corresponds to Fig. 2 except for the bottom half, which illustrates that for the particular mobile device 20C, direct location reporting according to methods 10, 30 has been selectively deactivated. In other terms, according to method 30, the reporting frequency fc of mobile device 20C of the group of mobile devices 20A-20C has been set to zero as the energy balance of the mobile device 20A-20C has fallen below a predefined threshold. Such a predefined threshold may, for example, be defined for operational reasons.

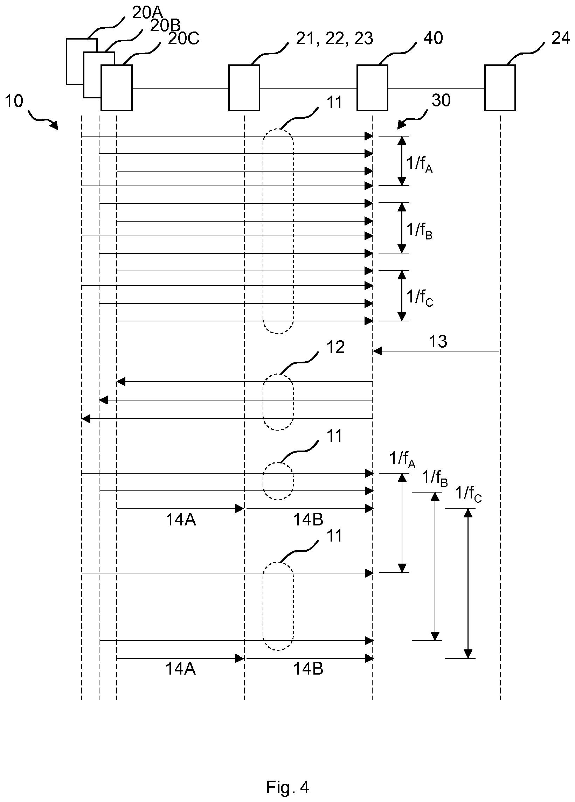

Alternatively or additionally, a threshold may arise from a certain reporting frequency observable over time for the mobile device 20C provided via the network's positioning function and owing to mobility and/or configuration of the mobile device 20C. Given a certain reporting frequency available from this network function, it may make sense to deploy direct location reporting only selectively, as will be shown in Fig. 4.

Fig. 4 illustrates parallel deployment of direct location reporting and the wireless network's positioning service for different mobile devices 20A-20C. As in Fig. 3, direct location reporting has been selectively deactivated for the mobile device 20C. By contrast, however, the network node 40 repetitively retrieves, for the mobile device 20C of the group of mobile devices 20A-20C and from a core network node 21 of the wireless network 21-23, a further location information 14B of the mobile device 20C. The further location information 14B results from a TAU message 14A received by the wireless network 21-23 for the mobile device 20C. As mobile device 20C is configured not to perform any direct location reporting to network node 40, receiving the TAU message 14A prevents the wireless network 21-23 from de-registration of the mobile device 20C due to inactivity.

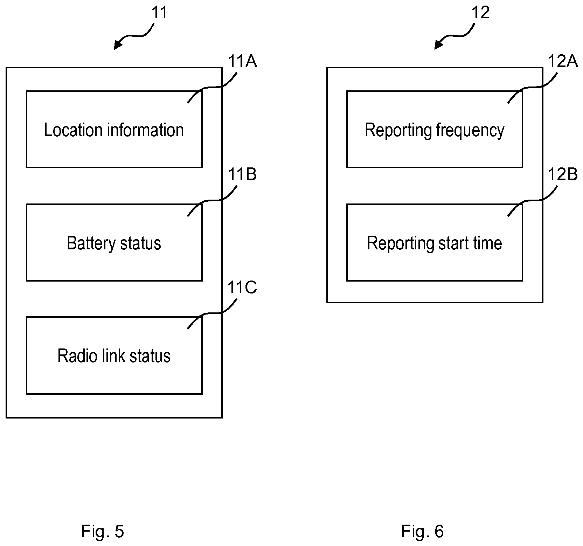

Fig. 5 illustrates schematically a location information 11 as defined in methods 10, 30 according to various embodiments.

According to Fig. 5, the location information 11 of a respective mobile device of a group of mobile devices 20A-20C comprises an actual location information 11A, and as well one or more parameters 11B, 11C indicative of the energy balance of the respective mobile device 20A-20C, namely a battery status 11B and a radio link status 11C.

In other words, according to the embodiment depicted in Fig. 5, the location information 11A, the battery status 11B and the radio link status 11C are jointly and repetitively communicated, from at least one mobile device 20A-20C of the group of mobile devices 20A-20C to the network node 40, at a respective reporting frequency f_{A}-f_{C}.

As an example, it is assumed that three mobile devices 20A-20C accompany respective boxes or trays used in a delivery/logistics service. Based on the reported location information 11, 11A, 11B, 11C of the mobile devices 20A-20C, the network node 40 deduces that the mobile devices 20A-20C can be assigned to a group for location reporting purposes, owing to similar mobility patterns, and may be configured with respect to their individual location reporting. The mobile devices 20A-20C have reported the following at a default reporting frequency/rate of every 5 minutes:
- Mobile device 20A: Battery status = 3 (good), Link status = 3 (good)
- Mobile device 20B: Battery status = 3 (good), Link status = 2 (average)
- Mobile device 20C: Battery status = 0 (poor), Link status = 3 (good)

According to the example, a classification may be made by the network node 40 based on a threshold comparison performed between the battery status 11B and the link status 11C of the respective mobile device 20A-20C and one or more respective thresholds, and the respective reporting frequency f_{A}-f_{C} of the respective mobile device 20A-20C may be set depending on the threshold comparison. In the example, the threshold comparison may look like this:
1. Battery status > 2 ∧ Link status > 2 ⇒ Reporting frequency/rate = every 10 minutes
2. Battery status > 2 ∧ Link status > 1 => Reporting frequency/rate = every 15 minutes
3. Battery status > 1 ∧ Link status > 1 => Reporting frequency/rate = every 20 minutes
4. Battery status < 1 ⇒ Reporting frequency/rate = zero, until the other mobile devices 20A, 20B of the group report a poor battery status

An activity frequency/rate of every 30 minutes is required to stay registered in the wireless network 21-23. Such an activity could be a direct location reporting or a Tracking Area Update.

For each of the respective mobile devices 20A-20C, the network node 40 determines the following configuration information 12, based on the first match of the above threshold comparison list:
- Mobile device 20A: reporting frequency/rate = every 10 minutes
- Mobile device 20B: reporting frequency/rate = every 15 minutes
- Mobile device 20C: reporting frequency/rate = zero.

In other terms, the network node 40 sets the reporting frequency f_{A}-f_{C} of the mobile device 20C of the group of mobile devices 20A-20C to zero as the energy balance of the mobile device 20C falls below the predefined threshold of 1, as defined for operational reasons.

As will be appreciated from the above, the centrally coordinated setting of the reporting frequency helps to balance a trade-off between individual energy conservation constraints imposed by the mobile devices, as well as on the other hand global reporting needs for the group of mobile devices to achieve accurate location reporting.

Fig. 6 illustrates schematically a reporting configuration 12 as defined in methods 10, 30 according to various embodiments.

The reporting configuration 12 for the respective mobile device 20A-20C comprises the respective reporting frequency 12A, f_{A}-f_{C} and a respective reporting start time 12B of the respective mobile device 20A-20C.

This enables communicating the respective location information 11 of the respective mobile device 20A-20C from the at least one mobile device 20A-20C to the network node 40 in accordance with the respective reporting frequency 12A, f_{A}-f_{C} and reporting start time 12B.

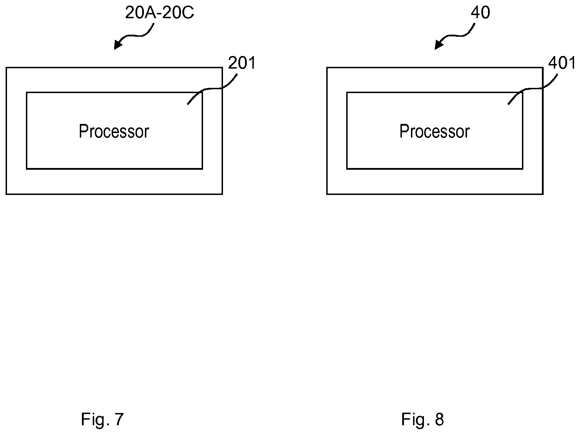

Fig. 7 illustrates schematically a mobile device 20A-20C according to an embodiment.

The mobile device 20A-20C comprises a processor 201. The processor 201 is configured to repetitively transmit location information 11 of the mobile device 20A-20C at a respective reporting frequency f_{A}-f_{C}, which depends on an energy balance of the respective mobile device 20A-20C. Additionally, the processor 201 may further be configured to perform the method 10 of providing location information of a group of mobile devices 20A-20C of a wireless network 21-23 to a network node 40 of the wireless network 21-23.

Fig. 8 illustrates schematically a network node 40 according to an embodiment.

The network node 40 comprises a processor 401 which is configured to perform method steps, in particular of the method 30 according to embodiments.

As illustrated in Fig. 8, in a first step, a location information 11, 11A of the respective mobile device 20A-20C is repetitively received, from each mobile device 20A-20C of a group of mobile devices 20A-20C of a wireless network 21-23, at a respective reporting frequency f_{A}-f_{C}.

In a second step, a location information of the group of mobile devices 20A-20C is determined depending on the location information 11, 11A of the mobile devices 20A-20C of the group of mobile devices 20A-20C.

In a third step, the reporting frequency f_{A}-f_{C} of each mobile device 20A-20C of the group of mobile devices 20A-20C is set depending on an energy balance of the respective mobile device 20A-20C.

While methods and devices according to various embodiments have been described in a context of LTE / 4G cellular networks, it will be appreciated by those skilled in the art that these embodiments may similarly be deployed in other wireless networks. For illustration, this may apply to 5G networks with different functional entities / functional distribution and different identifiers for these functional entities.

## Claims

1. A method (10) of providing location information of a group of mobile devices (20A-20C) of a wireless network (21-23) to a network node (40) of the wireless network (21-23), the method comprising:
repetitively transmitting, by at least one mobile device (20A-20C) of the group of mobile devices (20A-20C), a location information (11, 11A) of the respective mobile device (20A-20C) at a respective reporting frequency (f_{A}-f_{C});
wherein the respective reporting frequency (f_{A}-f_{C}) of the respective mobile device (20A-20C) depends on an energy balance of the respective mobile device (20A-20C); receiving, by the at least one mobile device (20A-20C) and from the network node (40), a reporting configuration (12), wherein the reporting configuration (12) comprises the reporting frequency (12A, f_{A}-f_{C}) of the respective mobile device (20A-20C),
**characterized in that**
the reporting configuration (12) for the respective mobile device (20A-20C) comprises a reporting start time (12B) of the respective mobile device (20A-20C), and
the location information is transmitted by the at least one mobile device (20A-20C) in accordance with the reporting start time (12B).

2. The method (10) of claim 1, wherein
the reporting configuration (12) for the respective mobile device (20A-20C) comprises the reporting frequency (12A, f_{A}-f_{C}) of the respective mobile device (20A-20C) in dependence of the energy balance of the respective mobile device (20A-20C).

3. The method (10) of any one of claims 1 to 2, further comprising:
- transmitting, by the at least one mobile device (20A-20C) and to the network node (40), one or more parameters (11B, 11C) indicative of the energy balance of the respective mobile device (20A-20C).

4. The method (10) of claim 3, wherein
the one or more parameters (11B, 11C) indicative of the energy balance of the respective mobile device (20A-20C) comprise at least one of a battery status (11B) and a radio link status (11C).

5. A mobile device (20A-20C) of a group of mobile devices, comprising
a processor (201) configured to repetitively transmit location information (11, 11A) of the mobile device (20A-20C) at a respective reporting frequency (f_{A}-f_{C}), wherein the respective reporting frequency (f_{A}-f_{C}) depends on an energy balance of the respective mobile device (20A-20C);
receive a reporting configuration (12), wherein the reporting configuration (12) comprises the respective reporting frequency (12A, f_{A}-f_{C}),
**characterized in that**
the reporting configuration (12) comprises a reporting start time (12B), and
the location information (11, 11A) is transmitted by the mobile device (20A-20C) in accordance with the reporting start time (12B).

6. A method (30) of operating a network node (40), comprising:
repetitively receiving, from each mobile device (20A-20C) of a group of mobile devices (20A-20C) of a wireless network (21-23), a location information (11, 11A) of the respective mobile device (20A-20C) at a respective reporting frequency (f_{A}-f_{C}),
determining a location information of the group of mobile devices (20A-20C) depending on the location information (11, 11A) of the mobile devices (20A-20C) of the group of mobile devices (20A-20C), and
setting the respective reporting frequency (f_{A}-f_{C}) of each mobile device (20A-20C) of the group of mobile devices (20A-20C) depending on an energy balance of the respective mobile device (20A-20C),
transmitting, to each mobile device (20A-20C) of the group, a reporting configuration (12) for the respective mobile device (20A-20C), wherein the reporting configuration (12) for the respective mobile device (20A-20C) comprises the respective reporting frequency (12A, f_{A}-f_{C}) of the respective mobile device (20A-20C),
**characterized in that**
the reporting configuration (12) for the respective mobile device (20A-20C) comprises a reporting start time (12B) of the respective mobile device (20A-20C).

7. The method (30) of claim 6, wherein
setting the reporting frequency (f_{A}-f_{C}) of each mobile device (20A-20C) of the group of mobile devices (20A-20C) comprises:
setting the respective reporting frequency (f_{A}-f_{C}) of the respective mobile device (20A-20C) depending on a comparison of the energy balance of the respective mobile device (20A-20C) with energy balances of one or more further mobile devices (20A-20C) of the group of mobile devices (20A-20C).

8. The method (30) of any one of claims 6 to 7, wherein
repetitively receiving the location information (11, 11A) from each mobile device (20A-20C) of the group of mobile devices (20A-20C) comprises
receiving the location information (11, 11A) from the mobile devices (20A-20C) of the group of mobile devices (20A-20C) in an interleaved manner in time domain.

9. The method (30) of any one of claims 6 to 8, further comprising:
receiving, from each mobile device (20A-20C) of the group of mobile devices (20A-20C), one or more parameters (11B, 11C) indicative of the energy balance of the respective mobile device (20A-20C), wherein setting the reporting frequency (f_{A}-f_{C}) of each mobile device (20A-20C) of the group of mobile devices (20A-20C) comprises setting the reporting frequency (f_{A}-f_{C}) of the respective mobile device (20A-20C) depending on the one or more parameters (11B, 11C).

10. The method (30) of claim 9, wherein
the one or more parameters (11B, 11C) indicative of the energy balance of the respective mobile device (20A-20C) comprise at least one of a battery status (11B) and a radio link status (11C).

11. The method (30) of any one of claims 9 - 10, further comprising:
performing a threshold comparison between the one or more parameters (11B, 11C) of the respective mobile device (20A-20C) and one or more respective thresholds, wherein setting the reporting frequency (f_{A}-f_{C}) of each mobile device (20A-20C) of the group of mobile devices (20A-20C) comprises
setting the reporting frequency (f_{A}-f_{C}) of the respective mobile device (20A-20C) depending on the threshold comparison.

12. The method (30) of any one of claims 6 - 11, wherein
setting the reporting frequency (f_{A}-f_{C}) of each mobile device (20A-20C) of the group of mobile devices (20A-20C) comprises
setting the reporting frequency (f_{A}-f_{C}) of the respective mobile device (20A-20C) of the group of mobile devices (20A-20C) depending on a target location (13) of the group of mobile devices (20A-20C), and/or
setting the reporting frequency (f_{A}-f_{C}) of a mobile device (20A-20C) of the group of mobile devices (20A-20C) to zero if the energy balance of the mobile device (20A-20C) falls below a predefined threshold.

13. The method (30) of claim 12, wherein
setting the reporting frequency (f_{A}-f_{C}) of each mobile device (20A-20C) of the group of mobile devices (20A-20C) comprises
setting the reporting frequency (f_{A}-f_{C}) of the respective mobile device (20A-20C) depending on a distance between a location of the group of mobile devices (20A-20C) associated with the location information of the group of mobile devices and the target location (13).

14. The method (30) of any one of claims 6 - 13, further comprising:
- repetitively retrieving, for one or more mobile devices (20A-20C) of the group of mobile devices (20A-20C) and from a core network node of the wireless network (21-23), a further location information (14B) of the respective mobile device (20A-20C).

15. A network node (40), comprising
a processor (401) configured to perform:
repetitively receiving, from each mobile device (20A-20C) of a group of mobile devices (20A-20C) of a wireless network (21-23), a location information (11, 11A) of the respective mobile device (20A-20C) at a respective reporting frequency (f_{A}-f_{C}),
determining a location information of the group of mobile devices (20A-20C) depending on the location information (11, 11A) of the mobile devices (20A-20C) of the group of mobile devices (20A-20C), and
setting the reporting frequency (f_{A}-f_{C}) of each mobile device (20A-20C) of the group of mobile devices (20A-20C) depending on an energy balance of the respective mobile device (20A-20C),
transmitting, to each mobile device (20A-20C) of the group, a reporting configuration (12) for the respective mobile device (20A-20C), wherein the reporting configuration (12) for the respective mobile device (20A-20C) comprises the respective reporting frequency (12A, f_{A}-f_{C}) of the respective mobile device (20A-20C),
**characterized in that**
the reporting configuration (12) for the respective mobile device (20A-20C) comprises a reporting start time (12B) of the respective mobile device (20A-20C).

## Patentansprüche

1. Verfahren (10) zur Bereitstellung von Ortsinformationen einer Gruppe von mobilen Vorrichtungen (20A-20C) eines drahtlosen Netzes (21-23) für einen Netzknoten (40) des drahtlosen Netzes (21-23), wobei das Verfahren Folgendes umfasst:
wiederholtes Senden, durch mindestens eine mobile Vorrichtung (20A-20C) der Gruppe von mobilen Vorrichtungen (20A-20C), einer Ortsinformation (11, 11A) der jeweiligen mobilen Vorrichtung (20A-20C) mit einer jeweiligen Meldefrequenz (f_{A}-f_{C});
wobei die jeweilige Meldefrequenz (f_{A}-f_{C}) der jeweiligen mobilen Vorrichtung (20A-20C) von einem Energiegleichgewicht der jeweiligen mobilen Vorrichtung (20A-20C) abhängt;
Empfangen, durch die mindestens eine mobile Vorrichtung (20A-20C) von dem Netzknoten (40), einer Meldekonfiguration (12), wobei die Meldekonfiguration (12) die Meldefrequenz (12A, f_{A}-f_{C}) der jeweiligen mobilen Vorrichtung (20A-20C) umfasst,
**dadurch gekennzeichnet, dass**
die Meldekonfiguration (12) für die jeweilige mobile Vorrichtung (20A-20C) eine Meldestartzeit (12B) der jeweiligen mobilen Vorrichtung (20A-20C) umfasst und
die Ortsinformation durch die mindestens eine mobile Vorrichtung (20A-20C) gemäß der Meldestartzeit (12B) gesendet wird.

2. Verfahren (10) nach Anspruch 1, wobei
die Meldekonfiguration (12) für die jeweilige mobile Vorrichtung (20A-20C) die Meldefrequenz (12A, f_{A}-f_{C}) der jeweiligen mobilen Vorrichtung (20A-20C) in Abhängigkeit von dem Energiegleichgewicht der jeweiligen mobilen Vorrichtung (20A-20C) umfasst.

3. Verfahren (10) nach einem der Ansprüche 1 bis 2, ferner umfassend:
- Senden eines oder mehrerer Parameter (11B, 11C) durch die mindestens eine mobile Vorrichtung (20A-20C) zu dem Netzknoten (40), die das Energiegleichgewicht der jeweiligen mobilen Vorrichtung (20A-20C) angeben.

4. Verfahren (10) nach Anspruch 3, wobei
der eine oder die mehreren Parameter (11B, 11C), die das Energiegleichgewicht der jeweiligen mobilen Vorrichtung (20A-20C) angeben, einen Batteriestatus (11B) und/oder einen Funkverbindungsstatus (11C) umfassen.

5. Mobile Vorrichtung (20A-20C) einer Gruppe von mobilen Vorrichtungen, umfassend:
einen Prozessor (201), ausgelegt zum wiederholten Senden von Ortsinformation (11, 11A) der mobilen Vorrichtung (20A-20C) auf einer jeweiligen Meldefrequenz (f_{A}-f_{C}), wobei die jeweilige Meldefrequenz (f_{A}-f_{C}) von einem Energiegleichgewicht der jeweiligen mobilen Vorrichtung (20A-20C) abhängt;
Empfangen einer Meldekonfiguration (12), wobei die Meldekonfiguration (12) die jeweilige Meldefrequenz (12A, f_{A}-f_{C}) umfasst,
**dadurch gekennzeichnet, dass**
die Meldekonfiguration (12) eine Meldestartzeit (12B) umfasst und
die Ortsinformationen (11, 11A) durch die mobile Vorrichtung (20A-20C) gemäß der Meldestartzeit (12B) gesendet werden.

6. Verfahren (30) zum Betrieb eines Netzknotens (40), umfassend:
wiederholtes Empfangen von jeder mobilen Vorrichtung (20A-20C) einer Gruppe von mobilen Vorrichtungen (20A-20C) eines drahtlosen Netzes (21-23) einer Ortsinformation (11, 11A) der jeweiligen mobilen Vorrichtung (20A-20C) auf einer jeweiligen Meldefrequenz (f_{A}-f_{C}),
Bestimmen einer Ortsinformation der Gruppe von mobilen Vorrichtungen (20A-20C) abhängig von den Ortsinformation (11, 11A) der mobilen Vorrichtung (20A-20C) der Gruppe von mobilen Vorrichtungen (20A-20C) und
Setzen der jeweiligen Meldefrequenz (f_{A}-f_{C}) jeder mobilen Vorrichtung (20A-20C) der Gruppe von mobilen Vorrichtungen (20A-20C) abhängig von einem Energiegleichgewicht der jeweiligen mobilen Vorrichtung (20A-20C),
Senden einer Meldekonfiguration (12) für die jeweilige mobile Vorrichtung (20A-20C) zu jeder mobilen Vorrichtung (20A-20C) der Gruppe, wobei die Meldekonfiguration (12) für die jeweilige mobile Vorrichtung (20A-20C) die jeweilige Meldefrequenz (12A, f_{A}-f_{C}) der jeweiligen mobilen Vorrichtung (20A-20C) umfasst,
**dadurch gekennzeichnet, dass**
die Meldekonfiguration (12) für die jeweilige mobile Vorrichtung (20A-20C) eine Meldestartzeit (12B) der jeweiligen mobilen Vorrichtung (20A-20C) umfasst.

7. Verfahren (30) nach Anspruch 6, wobei
Setzen der Meldefrequenz (f_{A}-f_{C}) jeder mobilen Vorrichtung (20A-20C) der Gruppe von mobilen Vorrichtungen (20A-20C) Folgendes umfasst:
Setzen der jeweiligen Meldefrequenz (f_{A}-f_{C}) der jeweiligen mobilen Vorrichtung (20A-20C) abhängig von einem Vergleich des Energiegleichgewichts der jeweiligen mobilen Vorrichtung (20A-20C) mit Energiegleichgewichten einer oder mehrerer weiterer mobiler Vorrichtungen (20A-20C) der Gruppe von mobilen Vorrichtungen (20A-20C).

8. Verfahren (30) nach einem der Ansprüche 6 bis 7, wobei
das wiederholte Empfangen der Ortsinformation (11, 11A) von jeder mobilen Vorrichtung (20A-20C) der Gruppe von mobilen Vorrichtungen (20A-20C) Folgendes umfasst:
Empfangen der Ortsinformation (11, 11A) von den mobilen Vorrichtungen (20A-20C) der Gruppe von mobilen Vorrichtungen (20A-20C) auf verschachtelte Weise im Zeitbereich.

9. Verfahren (30) nach einem der Ansprüche 6 bis 8, ferner umfassend:
Empfangen eines oder mehrerer Parameter (11B, 11C) von jeder mobilen Vorrichtung (20A-20C) der Gruppe von mobilen Vorrichtungen (20A-20C), die das Energiegleichgewicht der jeweiligen mobilen Vorrichtung (20A-20C) angeben, wobei Setzen der Meldefrequenz (f_{A}-f_{C}) jeder mobilen Vorrichtung (20A-20C) der Gruppe von mobilen Vorrichtungen (20A-20C) Setzen der Meldefrequenz (f_{A}-f_{C}) der jeweiligen mobilen Vorrichtung (20A-20C) abhängig von dem einen oder den mehreren Parametern (11B, 11C) umfasst.

10. Verfahren (30) nach Anspruch 9, wobei
der eine oder die mehreren Parameter (11B, 11C), die das Energiegleichgewicht der jeweiligen mobilen Vorrichtung (20A-20C) angeben, einen Batteriestatus (11B) und/oder einen Funkverbindungsstatus (11C) umfassen.

11. Verfahren (30) nach einem der Ansprüche 9-10, ferner umfassend:
Durchführen eines Schwellenvergleichs zwischen dem einen oder den mehreren Parametern (11B, 11C) der jeweiligen mobilen Vorrichtung (20A-20C) und einer oder mehreren jeweiligen Schwellen, wobei Setzen der Meldefrequenz (f_{A}-f_{C}) jeder mobilen Vorrichtung (20A-20C) der Gruppe von mobilen Vorrichtungen (20A-20C) Folgendes umfasst:
Setzen der Meldefrequenz (f_{A}-f_{C}) der jeweiligen mobilen Vorrichtung (20A-20C) abhängig von dem Schwellenvergleich.

12. Verfahren (30) nach einem der Ansprüche 6-11, wobei
Setzen der Meldefrequenz (f_{A}-f_{C}) jeder mobilen Vorrichtung (20A-20C) der Gruppe von mobilen Vorrichtungen (20A-20C) Folgendes umfasst:
Setzen der Meldefrequenz (f_{A}-f_{C}) der jeweiligen mobilen Vorrichtung (20A-20C) der Gruppe von mobilen Vorrichtungen (20A-20C) abhängig von einem Zielort (13) der Gruppe von mobilen Vorrichtungen (20A-20C) und/oder
Setzen der Meldefrequenz (f_{A}-f_{C}) einer mobilen Vorrichtung (20A-20C) der Gruppe von mobilen Vorrichtungen (20A-20C) auf null, wenn das Energiegleichgewicht der mobilen Vorrichtung (20A-20C) unter eine vordefinierte Schwelle fällt.

13. Verfahren (30) nach Anspruch 12, wobei
Setzen der Meldefrequenz (f_{A}-f_{C}) jeder mobilen Vorrichtung (20A-20C) der Gruppe von mobilen Vorrichtungen (20A-20C) Folgendes umfasst:
Setzen der Meldefrequenz (f_{A}-f_{C}) der jeweiligen mobilen Vorrichtung (20A-20C) abhängig von einer Distanz zwischen einem Ort der Gruppe von mobilen Vorrichtungen (20A-20C), der den Ortsinformationen der Gruppe von mobilen Vorrichtungen zugeordnet ist, und dem Zielort (13) .

14. Verfahren (30) nach einem der Ansprüche 6-13, ferner umfassend:
- wiederholtes Abrufen für eine oder mehrere mobile Vorrichtungen (20A-20C) der Gruppe von mobilen Vorrichtungen (20A-20C) und von einem Kernnetzknoten des drahtlosen Netzes (21-23) einer weiteren Ortsinformation (14B) der jeweiligen mobilen Vorrichtung (20A-20C).

15. Netzknoten (40), umfassend:
einen Prozessor (401), der dafür ausgelegt ist, Folgendes durchzuführen:
wiederholtes Empfangen von jeder mobilen Vorrichtung (20A-20C) einer Gruppe von mobilen Vorrichtungen (20A-20C) eines drahtlosen Netzes (21-23), einer Ortsinformation (11, 11A) der jeweiligen mobilen Vorrichtung (20A-20C) auf einer jeweiligen Meldefrequenz (f_{A}-f_{C}),
Bestimmen einer Ortsinformation der Gruppe von mobilen Vorrichtungen (20A-20C) abhängig von der Ortsinformation (11, 11A) der mobilen Vorrichtungen (20A-20C) der Gruppe von mobilen Vorrichtungen (20A-20C) und
Setzen der Meldefrequenz (f_{A}-f_{C}) jeder mobilen Vorrichtung (20A-20C) der Gruppe von mobilen Vorrichtungen (20A-20C) abhängig von einem Energiegleichgewicht der jeweiligen mobilen Vorrichtungen (20A-20C),
Senden einer Meldekonfiguration (12) zu jeder mobilen Vorrichtung (20A-20C) der Gruppe für die jeweilige mobile Vorrichtung (20A-20C), wobei die Meldekonfiguration (12) für die jeweilige mobile Vorrichtung (20A-20C) die jeweilige Meldefrequenz (12, f_{A}-f_{C}) der jeweiligen mobilen Vorrichtung (20A-20C) umfasst,
**dadurch gekennzeichnet, dass**
die Meldekonfiguration (12) für die jeweilige mobile Vorrichtung (20A-20C) eine Meldestartzeit (12B) der jeweiligen mobilen Vorrichtung (20A-20C) umfasst.

## Revendications

1. Procédé (10) de fourniture d'informations de localisation d'un groupe de dispositifs mobiles (20A-20C) d'un réseau sans fil (21-23) à un nœud de réseau (40) du réseau sans fil (21-23), le procédé comprenant :
la transmission répétitive, par au moins un dispositif mobile (20A-20C) du groupe de dispositifs mobiles (20A-20C), d'informations de localisation (11, 11A) du dispositif mobile respectif (20A-20C) à une fréquence de rapport respective (f_{A}-f_{C}) ;
la fréquence de rapport respective (f_{A}-f_{C}) du dispositif mobile respectif (20A-20C) dépendant d'un bilan énergétique du dispositif mobile respectif (20A-20C) ;
la réception, par l'au moins un dispositif mobile (20A-20C) et en provenance du nœud de réseau (40), d'une configuration de rapport (12), laquelle configuration de rapport (12) comprend la fréquence de rapport (12A, f_{A}-f_{C}) du dispositif mobile respectif (20A-20C),
**caractérisé en ce que**
la configuration de rapport (12) pour le dispositif mobile respectif (20A-20C) comprend une heure de démarrage de rapport (12B) du dispositif mobile respectif (20A-20C), et
les informations de localisation sont transmises par l'au moins un dispositif mobile (20A-20C) selon l'heure de démarrage de rapport (12B).

2. Procédé (10) selon la revendication 1, dans lequel
la configuration de rapport (12) pour le dispositif mobile respectif (20A-20C) comprend la fréquence de rapport (12A, f_{A}-f_{C}) du dispositif mobile respectif (20A-20C) en fonction du bilan énergétique du dispositif mobile respectif (20A-20C).

3. Procédé (10) selon l'une quelconque des revendications 1 à 2, comprenant en outre :
la transmission, par l'au moins un dispositif mobile (20A-20C) et au nœud de réseau (40), d'un ou plusieurs paramètres (11B, 11C) indicatifs de l'équilibre énergétique du dispositif mobile respectif (20A-20C).

4. Procédé (10) selon la revendication 3, dans lequel
le ou les paramètres (11B, 11C) indicatifs de l'équilibre énergétique du dispositif mobile respectif (20A-20C) comprennent au moins l'un d'un état de la batterie (11B) et d'un état de la liaison radio (11C).

5. Dispositif mobile (20A-20C) d'un groupe de dispositifs mobiles, comprenant
un processeur (201) configuré pour transmettre de manière répétitive des informations de localisation (11, 11A) du dispositif mobile (20A-20C) à une fréquence de rapport respective (f_{A}-f_{C}), la fréquence de rapport respective (f_{A}-f_{C}) dépendant d'un équilibre énergétique du dispositif mobile respectif (20A-20C) ;
recevoir une configuration de rapport (12), laquelle configuration de rapport (12) comprend la fréquence de rapport respective (12A, f_{A}-f_{C}),
**caractérisé en ce que**
la configuration de rapport (12) comprend une heure de démarrage de rapport (128), et
les informations de localisation (11, 11A) sont transmises par le dispositif mobile (20A-20C) selon l'heure de démarrage de rapport (12B).

6. Procédé (30) de fonctionnement d'un nœud de réseau (40), comprenant :
la réception répétitive, en provenance de chaque dispositif mobile (20A-20C) d'un groupe de dispositifs mobiles (20A-20C) d'un réseau sans fil (21-23), d'informations de localisation (11, 11A) du dispositif mobile respectif (20A-20C) à une fréquence de rapport respective (f_{A}-f_{C}),
la détermination d'informations de localisation du groupe de dispositifs mobiles (20A-20C) en fonction des informations de localisation (11, 11A) des dispositifs mobiles (20A-20C) du groupe de dispositifs mobiles (20A-20C), et
le réglage de la fréquence de rapport respective (f_{A}-f_{C}) de chaque dispositif mobile respectif (20A-20C) du groupe de dispositifs mobiles ( 20A-20C) en fonction d'un bilan énergétique du dispositif mobile respectif (20A-20C),
la transmission, à chaque dispositif mobile (20A-20C) du groupe, d'une configuration de rapport (12) pour le dispositif mobile respectif (20A-20C), laquelle configuration de rapport (12) pour le dispositif mobile respectif (20A-20C) comprend la fréquence de rapport respective (12A, f_{A}-f_{C}) du dispositif mobile respectif (20A-20C),
**caractérisé en ce que**
la configuration de rapport (12) pour le dispositif mobile respectif (20A-20C) comprend une heure de démarrage de rapport (12B) du dispositif mobile respectif (20A-20C) .

7. Procédé (30) selon la revendication 6, dans lequel
le réglage de la fréquence de rapport (f_{A}-f_{C}) de chaque dispositif mobile (20A-20C) du groupe de dispositifs mobiles (20A-20C) comprend :
le réglage de la fréquence de rapport respective (f_{A}-f_{C}) du dispositif mobile respectif (20A-20C) en fonction d'une comparaison de l'équilibre énergétique du dispositif mobile respectif (20A-20C) aux équilibres énergétiques d'un ou plusieurs autres dispositifs mobiles (20A-20C) du groupe de dispositifs mobiles (20A-20C).

8. Procédé (30) selon l'une quelconque des revendications 6 à 7, dans lequel
la réception répétitive des informations de localisation (11, 11A) en provenance de chaque dispositif mobile (20A-20C) du groupe de dispositifs mobiles (20A-20C) comprend
la réception des informations de localisation (11, 11A) en provenance des dispositifs mobiles (20A-20C) du groupe de dispositifs mobiles (20A-20C) d'une manière entrelacée dans le domaine temporel.

9. Procédé (30) selon l'une quelconque des revendications 6 à 8, comprenant en outre :
la réception, en provenance de chaque dispositif mobile (20A-20C) du groupe de dispositifs mobiles (20A-20C), d'un ou plusieurs paramètres (11B, 11C) indicatifs de l'équilibre énergétique du dispositif mobile respectif (20A-20C), le réglage de la fréquence de rapport (f_{A}-f_{C}) de chaque dispositif mobile (20A-20C) du groupe de dispositifs mobiles (20A-20C) comprenant le réglage de la fréquence de rapport (f_{A}-f_{C}) du dispositif mobile respectif (20A-20C) en fonction d'une comparaison du ou des paramètres (11B, 11C).

10. Procédé (30) selon la revendication 9, dans lequel
le ou les paramètres (11B, 11C) indicatifs de l'équilibre énergétique du dispositif mobile respectif (20A-20C) comprennent au moins l'un d'un état de la batterie (11B) et d'un état de la liaison radio (11C).

11. Procédé (30) selon l'une quelconque des revendications 9 à 10, comprenant en outre :
l'exécution d'une comparaison de seuil entre le ou les paramètres (11B, 11C) du dispositif mobile respectif (20A-20C) et un ou plusieurs seuils respectifs, le réglage de la fréquence de rapport (f_{A}-f_{C}) de chaque dispositif mobile (20A-20C) du groupe de dispositifs mobiles (20A-20C) comprenant le réglage de la fréquence de rapport (f_{A}-f_{C}) du dispositif mobile respectif (20A-20C) en fonction d'une comparaison de seuil.

12. Procédé (30) selon l'une quelconque des revendications 6 à 11, dans lequel
le réglage de la fréquence de rapport (f_{A}-f_{C}) de chaque dispositif mobile (20A-20C) du groupe de dispositifs mobiles (20A-20C) comprend
le réglage de la fréquence de rapport (f_{A}-f_{C}) du dispositif mobile respectif (20A-20C) du groupe de dispositifs mobiles (20A-20C) en fonction d'une localisation cible (13) du groupe de dispositifs mobiles (20A-20C), et/ou
le réglage de la fréquence de rapport (f_{A}-f_{C}) d'un dispositif mobile (20A-20C) du groupe de dispositifs mobiles ( 20A-20C) à zéro si le bilan énergétique du dispositif mobile (20A- 20A-20C) tombe en-dessous d'un seuil prédéfini.

13. Procédé (30) selon la revendication 12, dans lequel
le réglage de la fréquence de rapport (f_{A}-f_{C}) de chaque dispositif mobile (20A-20C) du groupe de dispositifs mobiles (20A-20C) comprend
le réglage de la fréquence de rapport (f_{A}-f_{C}) du dispositif mobile respectif (20A-20C) en fonction d'une distance entre une localisation du groupe de dispositifs mobiles (20A-20C) associé aux informations de localisation du groupe de dispositifs mobiles et la localisation cible (13).

14. Procédé (30) selon l'une quelconque des revendications 6 à 13, comprenant en outre :
la réception répétitive, pour un ou plusieurs dispositifs mobiles (20A-20C) du groupe de dispositifs mobiles (20A-20C) et en provenance d'un nœud de réseau cœur du réseau sans fil (21-23), d'informations de localisation supplémentaires (148) du dispositif mobile respectif (20A-20C).

15. Nœud de réseau (40) comprenant
un processeur (401) configuré pour exécuter :
la réception répétitive, en provenance de chaque dispositif mobile (20A-20C) d'un groupe de dispositifs mobiles (20A-20C) d'un réseau sans fil (21-23), d'informations de localisation (11, 11A) du dispositif mobile respectif (20A-20C) à une fréquence de rapport respective (f_{A}-f_{C}),
la détermination d'informations de localisation du groupe de dispositifs mobiles (20A-20C) en fonction des informations de localisation (11, 11A) des dispositifs mobiles (20A-20C) du groupe de dispositifs mobiles (20A-20C), et
le réglage de la fréquence de rapport (f_{A}-f_{C}) de chaque dispositif mobile (20A-20C) du groupe de dispositifs mobiles (20A-20C) en fonction d'un bilan énergétique du dispositif mobile respectif (20A-20C),
la transmission, à chaque dispositif mobile (20A-20C) du groupe, d'une configuration de rapport (12) pour le dispositif mobile respectif (20A-20C), laquelle configuration de rapport (12) pour le dispositif mobile respectif (20A-20C) comprend la fréquence de rapport respective (12A, f_{A}-f_{C}) du dispositif mobile respectif (20A-20C),
**caractérisé en ce que**
la configuration de rapport (12) pour le dispositif mobile respectif (20A-20C) comprend une heure de démarrage de rapport (128) du dispositif mobile respectif (20A-20C) .
